# EUROPÄISCHE PATENTANMELDUNG

(11) **EP 1 146 498 A2**
(43) Veröffentlichungstag der Anmeldung: **17.10.2001**
(21) Anmeldenummer: 01108717.8
(22) Anmeldetag: 06.04.2001
(51) Int. Cl.: G09B 7/04, G09B 5/14

(54) **Lernsystem und Verfahren zur Steuerung eines Lernsystems**

(30) Priorität: 11.04.2000 DE 10017733; 28.11.2000 DE 10059054
(71) Anmelder: Billhardt, Jutta, 10247 Berlin (DE); Herrmann, Thorsten, 63654 Büdingen (DE)
(72) Erfinder: Herrmann, Thorsten, 63654 Büdingen (DE)
(74) Vertreter: Castell, Klaus, Dr.-Ing.

(57) **Zusammenfassung**

Ein sehr individuelles Lernsystem bzw. Verfahren zur Steuerung eines Lernsystems kann erreicht werden, wenn einem Schüler ein Projektangebot, dessen Umfang von einer in einem Kategoriespeicher abgelegten Leistungsbewertung und von einer jeweils durchgeführten Unterrichtseinheit abhängt, zur Verfügung gestellt wird, wobei das Projektangebot aus einem Vorrat an Projekten, die in einem entsprechendem Speicher abgelegt sind, schöpft.

## Beschreibung

Die Erfindung betrifft ein Lernsystem sowie ein Verfahren zur Steuerung eines Lernsystems, bei welchem einem Schüler zumindest ein Projekt aus einem Projektspeicher aufgrund einer durchgeführten Unterrichtseinheit, die in einem Speicher abgelegt ist, zur Verfügung gestellt wird.

Derartige Lernsysteme sind beispielsweise aus der EP 0 710 942 P1 bekannt, wobei jeweils einem Schüler eine bestimmte Lernfolge im Rahmen einer Unterrichtseinheit als Folge verschiedener Projekte vorgegeben wird. In vorliegendem Zusammenhang beschreibt der Begriff "Projekt" einen Lernschritt bzw. eine kleinste Lerneinheit, mit welchem einem Schüler eine bestimmte Menge Wissen unter Durchführung einer Lernkontrolle vermittelt wird bzw. vermittelt werden soll. Eine Unterrichtseinheit hingegen besteht aus einer Folge von bestimmten Projekten bzw. Lernschritten, die den Schüler zielorientiert auf eine Prüfung vorbereitet. Hierbei ist die Projektfolge konform zu einen jeweiligen Lehrplan bzw. Rahmenlehrplan, der der entsprechenden Prüfung zugrunde liegt, ausgewählt.

Da die Schüler generell unterschiedliche Wissensgrade und ein unterschiedliches Lernverhalten aufweisen, erweist sich ein derartiges Lernsystem als verhältnismäßig starr, da jeder Schüler, der eine bestimmte Unterrichtseinheit durchführen möchte, genau die dort vorgegebenen Projektschritte nacheinander durchführen muss.

Es ist Aufgabe vorliegender Erfindung, ein gattungsgemäßes Lernsystem bzw. ein gattungsgemäßes Verfahren zur Steuerung eines Lernsystems derart auszugestalten, bei welchem auf das individuelle Lernverhalten und auf das individuelle Wissen des Schülers möglichst flexibel eingegangen werden kann und welches dem Schüler eine höchstmögliche Motivation vermittelt wird.

Als Lösung schlägt die Erfindung einerseits ein Lernsystem vor, bei welchem ein Schüler zumindest ein Projekt aus einem Projektspeicher und einer durchgeführten Unterrichtseinheit, die in einem Speicher abgelegt ist, zur Verfügung gestellt wird, und welches sich durch einen Kategoriespeicher mit einer Leistungsbewertung des Schülers kennzeichnet, der derart mit dem Speicher für die durchgeführte Unterrichtseinheit und dem Projektspeicher wirkverbunden ist, dass dem Schüler ein Projektangebot, dessen Umfang von der Kategorie und der durchgeführten Unterrichtseinheit abhängt, zur Verfügung gestellt wird.

Dementsprechend schlägt die Erfindung ein Verfahren zur Steuerung eines Lernsystems vor, bei welchem einem Schüler zumindestens ein Projekt aus einem Projektspeicher aufgrund einer durchgeführten Unterrichtseinheit, die in einem Speicher abgelegt ist, zur Verfügung gestellt wird und welches sich dadurch kennzeichnet, dass dem Schüler ein Projektangebot, dessen Umfang von einer in einem Kategoriespeicher abgelegten Leistungsbewertung und von der durchgeführten Unterrichtseinheit abhängt, zur Verfügung gestellt wird.

Anders als bei bekannten Lernsystemen besteht bei dem erfindungsgemäßen Lernsystem somit die Möglichkeit, dass einem Schüler im Rahmen der von ihm durchgeführten Unterrichtseinheit zu einem bestimmten Zeitpunkt mehr als nur ein Projekt angeboten wird. Hierbei hängen die angebotenen Projekte naturgemäß mit der durchgeführten Unterrichtseinheit zusammen, wobei einem Schüler mit einer hohen Leistungsbewertung ein entsprechend höheres Projektangebot zur Verfügung gestellt werden kann.

Der Schüler wird somit in die Lage versetzt, im Rahmen der ihm angebotenen Projekte diejenigen zu bearbeiten, die ihn am meisten interessieren. Dementsprechend ist davon auszugehen, dass der Schüler die von ihm selbst gewählten Projekte mit einer höheren Motivation bearbeitet, als wenn ihm lediglich genau ein Projekt zur Bearbeitung zur Verfügung gestellt wird.

Bei schwächeren Schülern, die naturgemäß einer engeren Betreuung bedürfen und bei denen eine zu große Projektauswahl im Zweifel zu einer Konfusion und nicht zu einer Leistungssteigerung führen würde, ist das Projektangebot entsprechend kleiner gewählt, wobei - je nach Leistung und nach durchgeführter Unterrichtseinheit - das Projektangebot auch auf genau ein Projekt reduziert werden kann.

Vorzugsweise weist das Lernsystem einen Speicher für Unterrichtseinheiten und einen Speicher für einen zu befolgenden Lehrplan auf, der gegebenenfalls aus einem Speicher, in welchem eine Vielzahl unterschiedlicher Lehrpläne abgelegt sind, auswählbar ist. Entsprechend des durchzuführenden Lehrplans wird nunmehr von dem Lernsystem dem Schüler eine Unterrichtseinheit bzw. eine Folge von Unterrichtseinheiten als durchzuführende bzw. durchgeführte Unterrichtseinheit vorgegeben, wobei vorzugsweise diese Unterrichtseinheit in einem speziellen Speicher für die durchgeführte Unterrichtseinheit abgelegt ist.

Je Unterrichtseinheit sind die durchzuführenden Projekte aufgeführt, die entsprechend in den Projektspeicher abgelegt sind. Vorzugsweise umfasst die Unterrichtseinheit auch eine Projekthierarchie, in welcher eine bevorzugte Abarbeitungsreihenfolge festgelegt ist. Darüber hinaus kann die Unterrichtseinheit feste Zeitpunkte bzw. Projektabschnitte umfassen, nach denen Lernkontrollen durchzuführen sind.

Dadurch dass aus einem Fundus von Unterrichtseinheiten anhand vorgegebener Lehrpläne die durchzuführenden bzw. durchgeführten Unterrichtseinheiten festgelegt werden, können für unterschiedliche Lehrpläne identische Unterrichtseinheiten zur Anwendung kommen, sodass sich der Gesamtbearbeitungsaufwand zur Betreuung des Lernsystems minimieren lässt.

Vorzugsweise umfasst das Lernsystem einen Speicher für eine Projektkontrolle, sodass ein Projekt bzw. ein Lernschritt hinsichtlich des Erreichens des Projektziels kontrolliert werden kann. Häufig wird dieses umgehend am Ende eines erledigten Projekts erfolgen. Insbesondere bei kleineren Lernschritten kann dieses jedoch auch aufgespart werden, bis eine bestimmte Zahl an Projekten erledigt ist.

Vorzugsweise umfasst der Speicher für die Projektkontrolle auch die Art der Kontrolle für ein zu kontrollierendes Projekt. Auf diese Weise ist die Kontrolle eines bearbeiteten Projektes unabhängig von dem eigentlichen Projekt nach dessen Bearbeitung in dem Lernsystem abgelegt, sodass das Gesamtsystem in übersichtlicher Weise eine Trennung zwischen Wissensvermittlung und Kontrolle vornimmt. Hierbei ist es beispielsweise denkbar, dass mit Aufruf eines bestimmten Projektes eine zu dem Projekt gehörende Kontrolle bereits in dem Projektkontrollspeicher abgelegt wird, sodass unabhängig von dem weiteren Bearbeiten des Projektes die Kontrolle nach den mit der Abspeicherung der Kontrolle ebenfalls abgespeicherten Regel durchgeführt wird.

So ist es möglich, eine Kontrolle durchzuführen, wenn ein bestimmtes Projekt als erledigt markiert ist. Andererseits können auch als unerledigt markierte Projekte im Rahmen dieser Kontrolle überprüft werden. Dieses kann beispielsweise nach Ablauf einer bestimmten Zeit geschehen.

Vorzugsweise umfasst der Speicher für die Projektkontrolle einen Kontrollzeitpunkt. Wobei die Abspeicherung eines derartigen Kontrollzeitpunktes unabhängig von den übrigen Vorgaben für die Projektkontrolle vorteilhaft ist. Durch Abspeichern des Kontrollzeitpunkts ist es besonders einfach, eine Progression des Lernens zu erzwingen. Hierbei werden vorzugsweise, wenn der Kontrollzeitpunkt erreicht wird, aus dem Projektkontrollspeicher sämtliche zu kontrollierende Projekte im Rahmen einer Gesamtkontrolle kontrolliert.

Vorzugsweise wird der Kontrollzeitpunkt abhängig von der in dem Kategoriespeicher abgelegten Leistungsbewertung gewählt. Insofern kann bei besseren Schülern eine Kontrolle in größeren Zeitabständen folgen. Insbesondere bei einer derartigen Vorgehensweise ist es von Vorteil, wenn in dem Projektkontrollspeicher sowohl die zu kontrollierenden Projekte als auch die Art der Kontrolle abgespeichert ist, sodass die Kontrolle bei Erreichen des Kontrollzeitpunktes unmittelbar und ohne Weiteres durchgeführt werden kann.

Vorzugsweise wird abhängig von der Projektkontrolle und den hierbei von dem Schüler erzielten Ergebnis die Kategorie bzw. die Leistungsbewertung im Kategoriespeicher verändert. Dieses kann beispielsweise dadurch geschehen, dass bei bestandener Kontrolle die Kategorie um eins erhöht und bei nicht bestandener Kontrolle die Kategorie um eins erniedrigt wird. Hierdurch ist es dem Schüler möglich, durch eigene Leistungen die Zahl der ihm angebotenen Projekte zu erhöhen und sich insbesondere den Zugang zu ihm noch verwehrten Projekten zu erarbeiten. Es ist davon anzugehen, dass hierdurch eine Motivationserhöhung bewirkt werden kann.

Vorzugsweise ist die Leistungsbewertung ständig durch den Schüler abrufbar, sodass hierdurch auch eine wirksame Eigenkontrolle ermöglicht wird.

Vorzugsweise weist das Lernsystem einen Speicher zur Markierung erledigter Projekte auf. Je nach Projektart, ist es denkbar, dass mit der Projekterledigung auch der vorbeschriebene Projektkontrollspeicher entsprechend aktualisiert wird, um beispielsweise eine sofortige Projektkontrolle einzuleiten.

Sind alle bzw. eine vorgeschriebene Anzahl an Projekten als erledigt markiert, kann eine Prüfung durchgeführt werden. Durch Bestehen der Prüfung wird dann die jeweilige Unterrichtseinheit beendet. Hierbei kann in der Unterrichtseinheit vorgesehen sein, dass diese wiederholt wird, wenn die Prüfung nicht bestanden ist.

Entsprechend der Vielzahl an Projekten, die durch das erfindungsgemäße Lernsystem verwaltet werden können, ist es durchaus denkbar, dass bestimmte Projekte parallel zueinander erledigt werden können. So kann ein bestimmtes Zwischenziel im Rahmen einer Unterrichtseinheit möglicherweise durch zwei oder mehr verschiedene Projekte erreicht werden. Vorzugsweise weist das Lernsystem wenigstens einen Marker zur Markierung derartig paralleler Projekte auf. Eine derartige Markierung kann einerseits projektabhängig oder andererseits auch unterrichtseinheitsabhängig erfolgen. Eine projektabhängige Parallelität ist hierbei unabhängig von der jeweiligen Unterrichtseinheit, im Rahmen welcher dieses Projekt durchgeführt wird, während eine unterrichtseinheitsabhängige Parallelität durch die jeweilige Unterrichtseinheit - und somit auch entsprechend des vorgegebenen Lehrplans - vorgegangen wird. Auf diese Weise können auch parallele Projekte als erledigt markiert werden, wenn ein bestimmtes Projekt als erledigt gilt. Insbesondere ist es auch möglich, derartige parallele Projekte im Rahmen der durchgeführten Kontrolle zu kontrollieren.

Insbesondere eine derartige Vorgehensweise ermöglicht es, dass ein Schüler in die Lage versetzt wird, mehrere Unterrichtseinheiten parallel durchzuführen und auf diese Weise mehrere Lehrpläne zu erfüllen, indem - quasi nebenbei - die notwendigen Projekte für die jeweiligen Unterrichtseinheiten bzw. Lehrpläne erledigt werden. Auf diese Weise ist es insbesondere für hochbegabte Schüler möglich, gleichzeitig mehrere Abschlüsse zu erreichen. Es können auch Mittel vorgesehen sein, die einem Schüler die Erledigung bestimmter Projekte nahegelegt wird, die noch zum Erreichen eines Lehrziels im Rahmen eines an sich von ihm nicht primär bearbeiteten Lernplans benötigt werden, sodass dieser Schüler in die Lage versetzt wird, auch diesen Abschluss zu erreichen.

Weitere Vorteile, Ziele und Eigenschaften vorliegender Erfindung werden anhand der nachfolgenden Beschreibung anliegender Zeichnung erläutert, in welcher beispielhaft ein erfindungsgemäßes Lernsystem dargestellt ist.

In der Zeichnung zeigen:

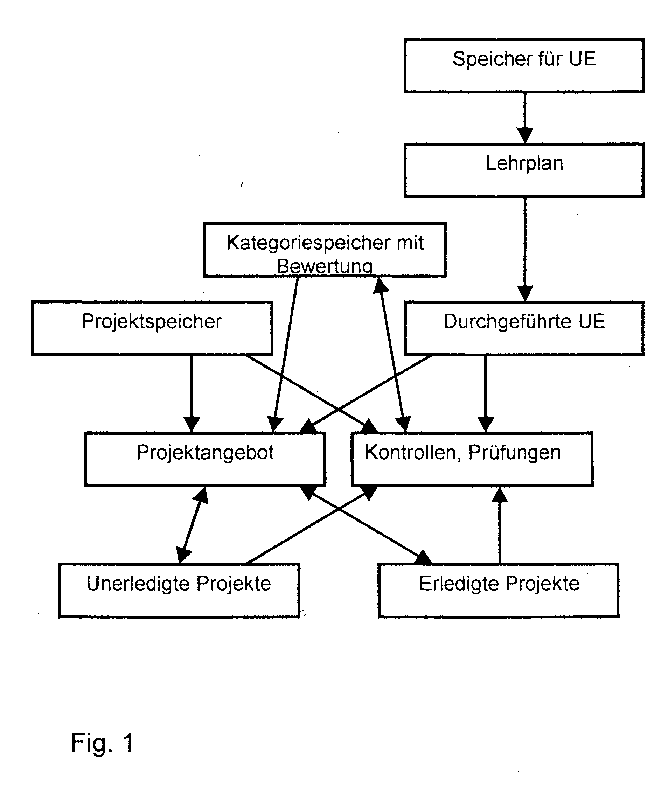

- Figur 1: ein Speichersystem für ein erfindungsgemäßes Lernsystem;
- Figur 2: einen Verfahrensablauf für ein erfindungsgemäßes Lernsystem und
- Figur 3: mögliche Lernfolgen.

Zentral für das erfindungsgemäße Lernsystem, wie es in der Zeichnung dargestellt ist, ist ein Projektangebot, welches einem jeweiligen Schüler zur Verfügung gestellt wird. Dieses Projektangebot wird aus einer Projektmenge, die in einem Projektspeicher abgelegt ist, zusammengestellt. Grundlage für dieses Zusammenstellung sind insbesondere die durchgeführte Unterrichtseinheit (UE) sowie ein Kategoriespeicher mit einer Leistungsbewertung des jeweiligen Schülers.

Hierbei wird durch die durchgeführte Unterrichtseinheit festgelegt, welche Projekte in welcher bevorzugten Reihenfolge abgearbeitet werden sollen, um eine entsprechende Prüfung zu bestehen. Dementsprechend werden notwendige Kontrollen bzw. Prüfungen aufgrund der durchgeführten Unterrichtseinheit in einem Speicher mit Kontrollen und Prüfungen abgelegt. Je nach durchgeführter Unterrichtseinheit können diesbezüglich auch feste Zeiträume vorgegeben werden.

Anhand des Inhalts des Kategoriespeichers wird festgelegt, wie viele Projekte der jeweilig durchgeführten Unterrichtseinheit einem Schüler gleichzeitig zur Verfügung gestellt werden. Diesbezüglich ist der Wert des Kategoriespeichers ein Maß, wieweit ein Schüler von der bevorzugten Reihenfolge der Projekte abweichen kann bzw. inwieweit ihm die Möglichkeit gegeben wird, auch parallele Projekte statt eines konkret in der durchgeführten Unterrichtseinheit vorgesehenen Projektes durchzuführen.

Darüber hinaus wird das Projektangebot beeinflusst von jeweils zwei Speichern, die unerledigte Projekte bzw. erledigte Projekte beinhalten. Erledigte Projekte werden einem Schüler nicht mehr angeboten, während unerledigte Projekte nach wie vor von dem Schüler durchgeführt werden können. Aufgrund der erledigten bzw. unerledigten Projekte wird darüber hinaus der Speicher mit Kontrollen bzw. Prüfungen aktualisiert, sodass entsprechende Kontrollen bzw. Prüfungen angesetzt werden können.

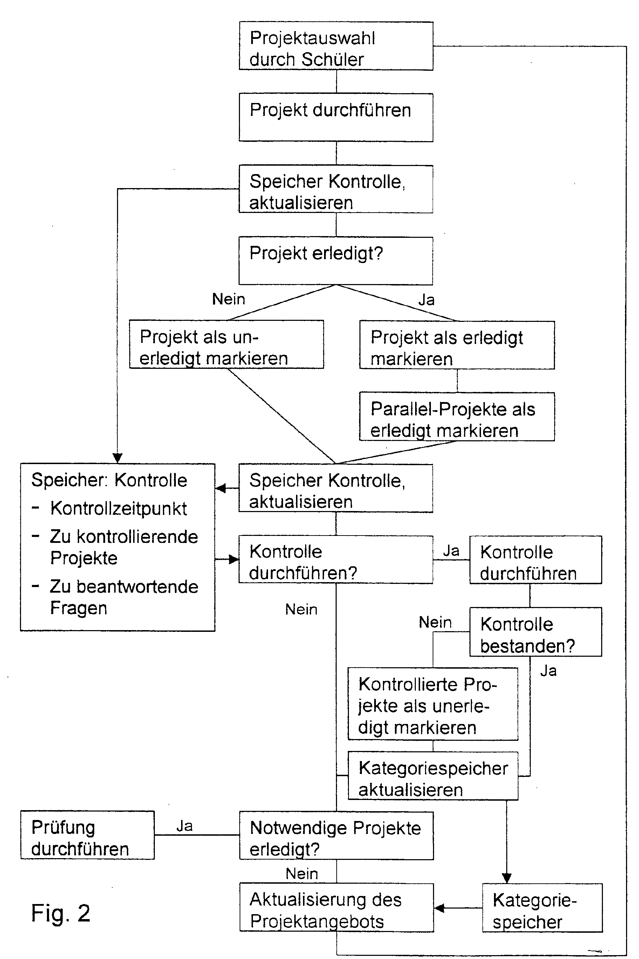

Aus dem jeweiligen Projektangebot kann der Schüler ein entsprechendes Projekt auswählen, wie in Figur 2 dargestellt. Dieses Projekt wird anschließend durchgeführt, wobei - je nach konkreter Projektwahl - gegebenenfalls der Speicher mit Projektkontrollen aktualisiert wird. Beispielsweise kann ein bestimmter Kontrollzeitpunkt festgelegt werden. Ebenso kann das zu kontrollierte Projekt sowie die Art der Kontrolle - gegebenenfalls schon bei der Kontrolle der zu beantwortenden Fragen - abgespeichert werden.

Anschließend wird überwacht, ob das Projekt erledigt wird. Je nach Projekt können hierfür mehrere Arbeitssitzungen von dem Schüler durchzuführen sein. Insbesondere ist es denkbar, dass der Schüler die Projektbearbeitung auch von sich aus unterbricht. Je nach erfolgter Bearbeitung wird das entsprechende Projekt als erledigt bzw. unerledigt markiert. Sollte das Projekt erledigt sein, werden gegebenenfalls auch Parellel-Projekte als erledigt markiert, sodass diese dem Schüler nicht mehr angeboten werden. Es ist allerdings auch möglich, dass Parallel-Projekte, die an sich noch nicht bearbeitet bzw. erledigt wurden, als unbearbeitet aber erledigt markiert werden, sodass der Schüler diese optional noch bearbeiten kann.

Entsprechend des Erledigungsgrades wird der Speicher hinsichtlich der Kontrollen nochmals aktualisiert. Anschließend wird der Speicher dahingehend überprüft, ob eine Kontrolle durchzuführen ist.

Falls eine Kontrolle durchzuführen ist, wird dieses beispielsweise im Rahmen eines Tests erledigt. Hierbei wird die durchgeführte Kontrolle bewertet und entsprechend der Kategoriespeicher der Leistungsbeurteilung aktualisiert. Im vorliegenden Ausführungsbeispiel erfolgt dieses durch Addition bzw. Subtraktion eines Zahlenwertes.

Sind alle notwendigen Projekte für eine Unterrichtseinheit erledigt, wird eine Prüfung durchgeführt, gegebenenfalls kann vorgesehen sein, dass eine Prüfung nach Ablauf einer bestimmten Zeit erzwungen wird, um eine gewisse Lernprogression einhalten zu können. Ist die Prüfung bestanden, so ist die jeweilige Unterrichtseinheit beendet. Ansonsten wird mit der Unterrichtseinheit noch einmal begonnen.

Anhand des in dem Kategoriespeicher abgelegten Zahlenwertes wird jeweils die Projektauswahl aktualisiert. Der Schüler hat es somit in der Hand, die Projektauswahl durch gute Leistungen zu vergrößern und somit zu erreichen, dass er seine Interessen gezielter durch von ihm ausgewählte Projekte verfolgen kann. Hierzu kann es vorteilhaft sein, dass dem Schüler neben dem eigentlichen Projektangebot auch noch artverwandte, aber nicht angebotene Projekte präsentiert werden, wobei dem Schüler mitgeteilt wird, welche Kategorie er erreichen muss, um diese Projekte durchführen zu können. Auch hierin kann eine erhebliche Motivationssteigerung liegen.

Es versteht sich, dass der Kategoriespeicher extern manipuliert werden kann, beispielsweise durch einen begleitenden Pädagogen. Eine derartige Manipulation kann insbesondere nach einer Bewertung einer Prüfung erfolgen.

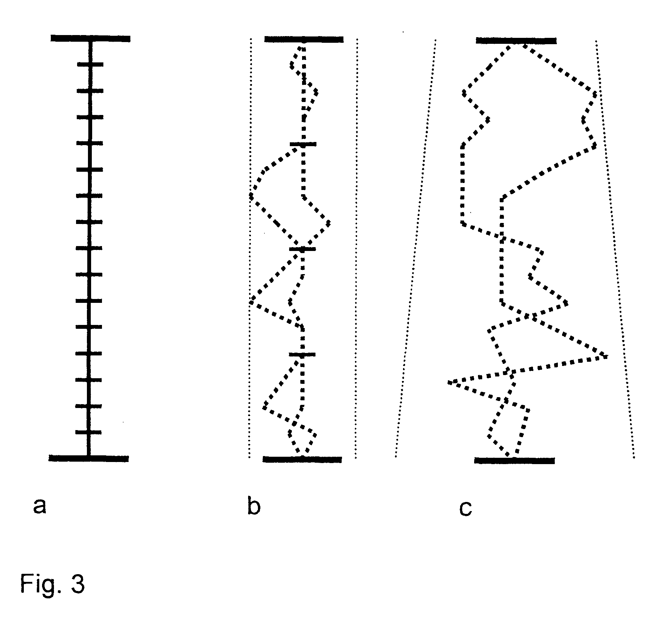

Je nach Leistungsbewertung des Schülers in dem Kategoriespeicher können sich somit unterschiedliche Projektfolgen ergeben. Da der Kategoriespeicher auch auf die auszuführenden Kontrollen einwirkt, wird durch diesen auch die Häufigkeit der Kontrollen festgelegt. Entsprechende Lernverläufe sind beispielhaft in Figur 3 dargestellt. Hierbei zeigt die Figur 3a einen Lernverlauf eines Schülers mit einer sehr niedrigen Leistungsbewertung. Dieser wird jeweils Projekt zu Projekt geführt, wobei jedes Projekt mit einer Kontrolle (dargestellt durch kleine Querstriche) beendet wird. Ein Schüler der mittleren Kategorie - wie in Figur 3b dargestellt - kann dieselbe Unterrichtseinheit mit lediglich drei Zwischenkontrollen durchlaufen. Ihm werden zwischen diesen Kontrollen Freiheiten in der Projektwahl gelassen, sodass- je nach den individuellen Interessen des Schülers - verschiedene Wege zum Erreichen des Unterrichtsziels führen. Bei hochbegabten Schülern, wie dieses in Figur 3c dargestellt ist, finden keine Kontrollen mehr statt. Der Schüler kann innerhalb der ihm angebotenen Projekte völlig frei wählen, wobei vorzugsweise das Projektangebot zu Beginn der Unterrichtseinheit leicht beschränkt wird, um gezielt bestimmte Grundlagen zunächst zu vermitteln. Je nach Leistungsstand und Unterrichtseinheit kann auf eine derartige Beschränkung verzichtet werden. Hierbei sind die jeweiligen Projektangebote gestrichelt dargestellt, während alternative Wege, um eine Unterrichtseinheit zu bestehen, gestrichen dargestellt sind.

Insbesondere bei einem begabten Schüler mit einem entsprechend großes Projektangebot können Parallel-Projekte als erledigt markiert werden. Im Anschluss an einem abgeschlossene Unterrichtseinheit wird überprüft, ob es parallele Lehrpläne gibt, die ähnliche Projekte zu ihrer Erfüllung benötigen. Sollte dieses der Fall sein, kann dem Schüler angeboten werden, auch diese entsprechende Unterrichtseinheit durchzuführen und eine entsprechende Prüfung abzulegen. Gegebenfalls wird der Schüler auf noch fehlende Projekte hingewiesen.

## Patentansprüche

1. Lernsystem, bei welchem einem Schüler zumindest ein Projekt aus einem Projektspeicher aufgrund einer durchgeführten Unterrichtseinheit, die in einem Speicher abgelegt ist, zur Verfügung gestellt wird, **gekennzeichnet durch** einen Kategoriespeicher mit einer Leistungsbewertung des Schülers, der derart mit dem Speicher für die durchgeführte Unterrichtseinheit und dem Projektspeicher wirkverbunden ist, dass dem Schüler ein Projektangebot, dessen Umfang von der Kategorie und der durchgeführten Unterrichtseinheit abhängt, zur Verfügung gestellt wird.

2. Verfahren zur Steuerung eines Lernsystems, bei welchem einem Schüler zumindest ein Projekt aus einem Projektspeicher aufgrund einer durchgeführten Unterrichtseinheit, die in einem Speicher abgelegt ist, zur Verfügung gestellt wird, **dadurch gekennzeichnet, dass** dem Schüler ein Projektangebot, dessen Umfang von einer in einem Kategoriespeicher abgelegten Leistungsbewertung und von der durchgeführten Unterrichtseinheit abhängt, zur Verfügung gestellt wird.

3. Lernsystem bzw. Verfahren nach Anspruch 1 oder 2, **gekennzeichnet durch** einen Speicher für Unterrichtseinheiten und einen Speicher für einen zu befolgenden Lehrplan, wobei in dem Lehrnplanspeicher je Lehrplan eine Unterrichtseinheit bzw. eine Folge von Unterrichtseinheiten abgelegt ist, von denen eine Unterrichtseinheit in dem Speicher für die aktuell durchgeführte Unterrichtseinheit ablegbar ist.

4. Lernsystem bzw. Verfahren nach einem der Ansprüche 1 bis 3, **gekennzeichnet durch** einen Speicher für eine Projektkontrolle, in welchem die bei einer Kontrolle zu kontrollierenden Projekte abgelegt sind.

5. Lernsystem bzw. Verfahren nach Anspruch 4, **dadurch gekennzeichnet, dass** der Speicher für die Projektkontrolle die Art der Kontrolle für ein zu kontrollierendes Projekt umfasst.

6. Lernsystem bzw. Verfahren nach einem der Ansprüche 1 bis 5, **gekennzeichnet durch** einen Speicher für eine Projektkontrolle, in welchem ein Kontrollzeitpunkt abgelegt ist.

7. Lernsystem bzw. Verfahren nach Anspruch 6, **dadurch gekennzeichnet, dass** der Kontrollzeitpunkt abhängig von der in dem Kontrollspeicher abgelegten Leistungsbewertung gewählt wird.

8. Lernsystem bzw. Verfahren nach einem der Ansprüche 1 bis 7, **dadurch gekennzeichnet, dass** abhängig von einer Projektkontrolle und dem hierbei von dem Schüler erzielten Ergebnis die Kategorie im Kategoriespeicher verändert wird.

9. Lernsystem bzw. Verfahren nach einem der Ansprüche 1 bis 8, **gekennzeichnet durch** einen Speicher zur Markierung erledigter Projekte als "erledigt".

10. Lernsystem bzw. Verfahren nach Anspruch 9, **dadurch gekennzeichnet, dass** eine Prüfung durchgeführt wird, wenn alle Projekte einer durchgeführten Unterrichtseinheit als "erledigt" markiert sind.

11. Lernsystem bzw. Verfahren nach einem der Ansprüche 1 bis 10, **gekennzeichnet durch** einen Marker zur Markierung paralleler Projekte.

12. Lernsystem bzw. Verfahren nach Anspruch 9 oder 10, **dadurch gekennzeichnet, dass** auch parallele Projekte als erledigt markiert werden, wenn ein Projekt als erledigt markiert wird.
